# EUROPÄISCHE PATENTSCHRIFT

(11) **EP 2 642 139 B1**
(45) Veröffentlichungstag und Bekanntmachung des Hinweises auf die Patenterteilung: **19.08.2015**
(21) Anmeldenummer: 13160153.6
(22) Anmeldetag: 20.03.2013
(51) Int. Cl.: F16B 35/04

(54) **Montageelement**
Mounting element
Elément de montage

(30) Priorität: 23.03.2012 DE 202012101035 U
(43) Veröffentlichungstag der Anmeldung: 25.09.2013
(73) Patentinhaber: Zumtobel Lighting GmbH, 6850 Dornbirn (AT)
(72) Erfinder: Feurle, Helmut, 6934 Sulzberg (AT)
(74) Vertreter: Thun, Clemens

(56) Entgegenhaltungen:
- US-A- 775 812
- US-A- 2 110 959
- US-A- 3 487 743
- US-A1- 2007 268 708

## Beschreibung

Die vorliegende Erfindung betrifft ein Montageelement aus einem Blech zum Aufschrauben einer Gewindemutter.

Aus dem Stand der Technik ist es bekannt, Gewindemuttern an einem Blechteil zu befestigen. Dies ist aus unterschiedlichsten Gründen erwünscht. Beispielsweise kann hierdurch ein weiteres Element an dem Blechteil befestigt werden oder eine entsprechende Erdung und/oder Kontaktierung mit einem Kabel erfolgen.

Um eine Mutter an einem Blechteil zu befestigen, wird üblicherweise ein Gewindebolzen verwendet. Der Gewindebolzen wird hierzu entweder auf das Blechteil aufgeschweißt oder es wird eine entsprechende Ausstanzung in das Blech eingebracht, in welche der Bolzen eingeführt und befestigt wird; beispielsweise eingepresst wird. Mittels des so vorgesehenen Gewindebolzens kann ein anderes Teil mittels der Mutter an dem Blechteil befestigt oder mit dem Blechteil kontaktiert werden.

Nachteilig bei dieser bekannten Vorrichtung ist das Vorsehen eines zusätzlichen Bauteils, nämlich des Gewindebolzens, sowie die zur Befestigung desselben auf bzw. mit dem Blechteil benötigten zusätzlichen Arbeitsschritte.

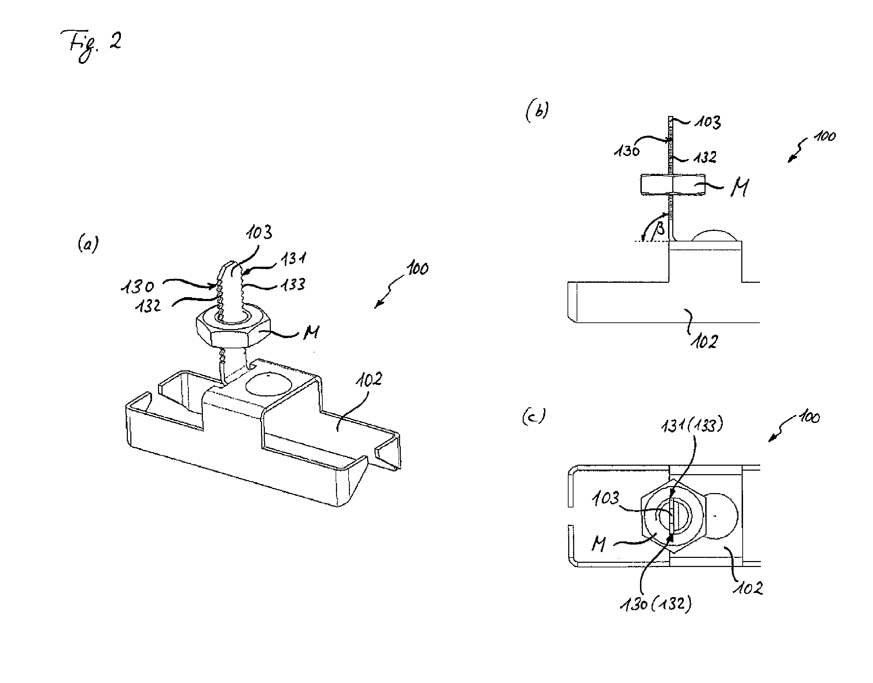

Aus dem Stand der Technik ist eine Lösung bekannt, mit der sich das Anbringen eines separaten Gewindebolzens erübrigt. Mit Verweis auf Figur 2 (Figur 2a: perspektivische Ansicht; Figur 2b: Seitenansicht; Figur 2c: Draufsicht) wird gemäß dieser Lösung vorgeschlagen, aus dem Blechteil 100 eine einstückig damit ausgebildete Lasche 103 um einen Winkel (β) von 90° auszubiegen, wobei die Lasche 103 an zwei gegenüberliegenden Seiten 130, 131 jeweils eine Verzahnung 132, 133 aufweist, durch welche ein für die Mutter M zu nutzendes Gewinde gebildet wird. Da sich die Mutter M lediglich an zwei gegenüberliegenden Punkten abstützt, kann die Mutter M leicht verkippen und verkanten. Aus dem Stand der Technik ist weiterhin ein Montageelement entsprechend der US 2110959 bekannt.

Es ist somit eine Aufgabe der Erfindung, ein Montageelement einstückig aus einem Blechteil unter Nutzung fertigungstechnischer Vorteile bereitzustellen, welches eine sichere Führung für eine auf das Montageelement aufzuschraubende Gewindemutter ermöglicht. Diese Aufgabe wird durch den Gegenstand des unabhängigen Anspruchs gelöst. Die abhängigen Ansprüche bilden den zentralen Gedanken der Erfindung in besonders vorteilhafter Weise weiter.

Gemäß einem ersten Aspekt betrifft die Erfindung ein Montageelement aus einem Blech, aufweisend einen Befestigungsbereich sowie eine integral mit dem Befestigungsbereich ausgebildete und sich vom Befestigungsbereich in Richtung einer Achse weg erstreckende Lasche, wobei die Lasche an wenigstens einer zur Achse im Wesentlichen parallelen außenkante eine gewindeartige Außenkontur aufweist, und wobei die Lasche wenigstens einen sich in Richtung der Achse erstreckenden Biegebereich aufweist, welcher die Lasche in zwei zueinander abgewinkelte Schenkel trennt, wobei wenigstens einer der Schenkel die Außenkante mit gewindeartiger Außenkontur aufweist, wobei sowohl diese gewindeartige Außenkante als auch eine dazu im Wesentlichen parallele zweite Außenkante des anderen Schenkels der Lasche sowie der Biegebereich jeweils eine Anlagefläche für eine Gewindemutter bilden, welche in Richtung der Achse auf die Lasche aufschraubbar ist, wobei einer der Schenkel sich integral aus dem Befestigungsbereich erstreckt und der oder die andere(n) Schenkel nur über den oder die Biegebereich(e) miteinander und über den einen Schenkel mit dem Befestigungsbereich verbunden ist/sind.

Das Montageelement gemäß der Erfindung ist somit nicht nur einstückig aus einem Blech hergestellt, sondern bietet auch eine sichere Führung für eine Mutter, welche auf eine Lasche des Montageelements aufgeschraubt wird. Dies wird dadurch ermöglich, da die Lasche durch wenigstens eine Biegung in mehrere Schenkel unterteilt wird, wobei die gewindeartigen Außenkanten der Schenkel sowie der Biegebereich bzw. dessen Außenkante jeweils eine Anlagefläche für die Mutter bilden. Die Mutter wird somit beim Aufschrauben auf das Montageelement - oder genauer auf die Lasche des Montageelements - über wenigstens drei Punkte abgestützt, wodurch die Gewindemutter über die gesamte aufzuschraubende Länge der Lasche durch diese sicher abgestützt wird, wodurch wiederum ein Verkanten vermieden wird.

Die Lasche kann nicht nur einen, sondern auch mehrere im Wesentlichen parallele Biegebereiche aufweisen. Weist die Lasche also x Biegebereiche auf - wobei x die Menge der positiven natürlichen Zahlen umfasst - so trennen diese die Lasche in (x + 1) zueinander abgewinkelte Schenkel. Die Lasche ist dabei derart ausgebildet bzw. umgebogen, dass sowohl die gewindeartigen Außenkanten als auch wenigstens einer, mehrere oder alle Biegebereiche eine Anlagefläche für eine Gewindemutter bilden, welche in Richtung der Achse auf die Lasche aufschraubbar ist. Hierdurch werden trotz integraler Ausbildung der Lasche aus einem Blech zahlreiche (vorzugsweise x + 2) Abstützpunkte für eine auf die Lasche aufzuschraubende Mutter bereitgestellt.

Wenigstens einer der Schenkel kann über seine Länge in Richtung der Achse gesehen eine variierende Breite aufweisen. Wenn bspw. eine Mutter über breitere Bereiche hinweg auf einen schmaleren Bereich aufgeschraubt wird, kann der breitere Bereich die Mutter in Richtung des schmaleren Bereichs vorspannen. Alternativ oder zusätzlich kann auch ein breiterer Bereich derart ausgebildet sein, dass er sich beim Aufschrauben einer Mutter wie eine Feder vorspannt und somit die Mutter verspannt. Hierdurch kann die Mutter sicher auf der Lasche gehalten werden.

Wenigstens einer der Schenkel kann sich mit zunehmendem Abstand von dem Befestigungsbereich verjüngen bzw. zusammenlaufen. Vorzugsweise ist hierbei der wenigstens eine Schenkel konisch oder kegelstumpfartig in der Seitenansicht oder trapezförmig ausgebildet. Durch Aufschrauben einer Mutter auf die Lasche wird der konisch ausgebildete Schenkel vorzugsweise wie eine Feder vorgespannt und sorgt somit für einen Lockerungsschutz der Mutter.

Einer der Schenkel erstreckt sich vorzugsweise integral aus dem Befestigungsbereich und der oder die andere(n) Schenkel ist/sind nur über den oder die Biegebereich(e) miteinander und über den einen Schenkel mit dem Befestigungsbereich verbunden. Folglich liegt ein fester und wenigstens ein freier Schenkel vor, wobei der Biegebereich durch einfaches Umbiegen des freien Schenkels bzgl. des festen Schenkels bereitgestellt werden kann.

Einer der Schenkel kann um eine erste orthogonal zur Achse ausgerichtete Schwenkachse zu dem Befestigungsbereich abgewinkelt sein, und der oder die andere(n) Schenkel können um eine weitere Schwenkachse entlang dem zugehörigen Biegebereich wenigstens zu dem einen Schenkel abgewinkelt sein. Die Achse (also auch die Lasche an sich) kann sich folglich in beliebiger Weise von dem Befestigungsbereich erstrecken, während die Schenkel zueinander in einem beliebigen Winkel umgebogen sein können. Vorzugsweise schließen die Schenkel der Lasche bzw. benachbarte Schenkel der Lasche einen Winkel zwischen 30 und 150° ein, vorzugsweise von 60°. Die Lasche erstreckt sich vorzugsweise bezüglich des Befestigungsbereichs in einem vorbestimmten Winkel, vorzugsweise 90°, von dem Befestigungsbereich weg.

Auch der Biegebereich kann entlang seiner Außenkante eine gewindeartige Außenkontur aufweisen, wodurch die gewindeartige Führung der Mutter begünstigt wird.

Vorzugsweise liegen in Richtung der Achse gesehen die Außenkanten der Lasche und des Biegebereichs bzw. der Biegebereiche auf einer Kreislinie eines diese verbindenden gedachten Kreises, welcher gleich oder größer dem Innendurchmesser einer auf die Lasche aufzuschraubenden Gewindemutter ist. Diese Ausgestaltung begünstigt eine gleichmäßige und sichere Abstützung der Gewindemutter über deren Umfang.

Die Kontur des Befestigungsbereichs, der Lasche und/oder der gewindeartigen Außenkanten kann durch einen Stanzvorgang oder einen Laserschneidvorgang gebildet sein.

Besonders vorzugsweise ist der Befestigungsbereich ein einstückiger Bestandteil eines Blechkörpers, wie z.B. eines Leuchtengehäuses. Mit anderen Worten ist gemäß einem weiteren Aspekt die Erfindung auch auf ein Leuchtengehäuse gerichtet, welches einen Blechkörper aufweist, wobei der Blechkörper integral mit einem erfindungsgemäßen Montageelement ausgebildet ist. Der Befestigungsbereich des Montageelements bildet dabei vorzugsweise den Blechkörper des Leuchtengehäuses. Es ist somit möglich, mehrere Bauteile eines Leuchtengehäuses integral auszubilden und somit neben der Teilanzahl auch die Arbeitsschritte zum Herstellen und zur Montage derselben deutlich zu reduzieren und zu vereinfachen.

Gemäß einem weiteren Aspekt der Erfindung ist vorgesehen, dass die Lasche des Montageelements an zwei zur Achse im Wesentlichen parallelen Außenkanten eine gewindeartige Außenkontur aufweist, im Übrigen aber wie oben beschrieben ausgebildet sein kann. Im Folgenden werden weitere Vorteile der Erfindung beispielhaft anhand von Ausführungsbeispielen gemäß der Zeichnungen der begleitenden Figuren beschrieben.

Es zeigen:
Fig. 1 ein Montageelement gemäß der Erfindung,
Fig. 2 ein Montageelement gemäß dem Stand der Technik.

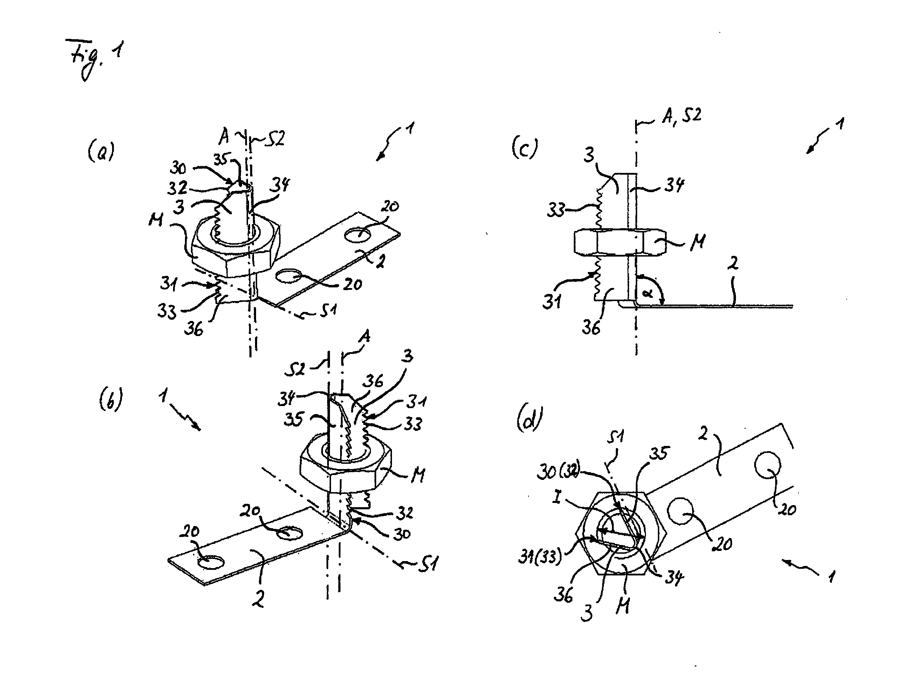

Figur 1 zeigt mehrere Ansichten eines erfindungsgemäßen Montageelements 1, wobei Figur 1a eine perspektivische seitliche Vorderansicht, Figur 1b eine perspektivische seitliche Rückansicht, Figur 1c eine Seitenansicht, und Figur 1d eine Draufsicht zeigen.

Das Montageelement 1 ist aus einem Blech hergestellt, vorzugsweise aus Stahl, Aluminium oder einem anderen Metall. Besonders vorzugsweise handelt es sich um Feinbleche, aber auch Grobbleche sind vom Gegenstand der Erfindung mit umfasst.

Das Montageelement 1 weist einen Befestigungsbereich 2 auf. Der Befestigungsbereich 2 kann, wie in Figur 1 gezeigt, eine ebene Blechplatte aufweisen, welche an einem weiteren Element beispielsweise aufgeschweißt oder mittels Halteelementen (z.B. Schrauben), welche bspw. Öffnungen 20 in dem Befestigungsbereich 2 durchgreifen, befestigt wird. Es ist jedoch auch denkbar, dass der Befestigungsbereich 2 komplexer ausgebildet ist, wie bspw. in Figur 2 (siehe Bezugszeichen 102) gezeigt. Der Befestigungsbereich 2 kann auch ein einstückiger Bestandteil eines anderen Blechkörpers sein. Als solch ein Blechkörper sind u.a. Leuchtengehäuse oder Gehäuse anderer (elektrischer oder elektronischer) Geräte umfasst.

Das Montageelement 1 weist ferner eine integral mit dem Befestigungsbereich 2 ausgebildete und sich vom Befestigungsbereich 2 in Richtung einer Achse A weg erstreckende Lasche 3 auf. Die Lasche 3 und folglich auch deren (Längs-)Achse A erstrecken sich vorzugsweise bezüglich des Befestigungsbereichs 2 in einem vorbestimmten Winkel (vorzugsweise 90°) von dem Befestigungsbereich 2 weg. Mit anderen Worten schließen der Befestigungsbereich 2 und die Achse A einen Winkel (α) zwischen 0 und 180° ein, wobei ein Winkel von 90° bevorzugt ist, um eine möglichst große Kontaktfläche zwischen dem Befestigungsbereich 2 sowie einer auf die Lasche 3 aufzuschraubenden (Gewinde-)Mutter M bereitzustellen, wie bspw. aus Figur 1c ersichtlich.

Um die Mutter M in Richtung der Achse A auf die Lasche 3 aufzuschrauben, weist die Lasche 3 an zwei gegenüberliegenden freien Enden 30, 31 jeweils eine gewindeartige Außenkontur 32, 33 als gewindeartige Außenkante 30, 31 auf. Die Gewindesteigung der gewindeartigen Außenkanten 30, 31 entspricht dabei vorzugsweise derjenigen der aufzuschraubenden Mutter M, wobei die gewindeartigen Außenkanten 30, 31 mit der Mutter M in Form einer Schraubverbindung zusammenwirken.

Die Lasche 3 weist des Weiteren wenigstens einen sich in Richtung der Achse A erstreckenden Biegebereich 34 auf. Der Biegebereich 34 trennt die Lasche 3 in zwei zueinander abgewinkelte Schenkel 35, 36 mit jeweils einer gewindeartigen Außenkante 30, 31. Der Biegebereich 34 verläuft dabei vorzugsweise (also alternativ oder zusätzlich) im Wesentlichen parallel zu und zwischen beiden gewindeartigen Außenkanten 30, 31 in Richtung der Achse A und trennt die Lasche 3 dabei in die zwei zueinander abgewinkelten Schenkel 35, 36.

Sowohl die gewindeartigen Außenkanten 30, 31 als auch der Biegebereich 34 bilden hierbei eine Anlagefläche für die Gewindemutter M, welche in Richtung der Achse A auf die Lasche 3 aufschraubbar ist. Vorzugswiese kann auch der Biegebereich 34 entlang seiner Außenkante eine gewindeartige Außenkontur aufweisen, welche bspw. in Form einer Oberflächenstruktur bereitgestellt wird. Diese wirkt vorzugsweise neben den gewindeartigen Außenkanten 30, 31 mit der Mutter M in Form einer Schraubverbindung zusammen.

Es ist darüber hinaus denkbar, dass die Lasche 3 mehr als einen Biegebereich 34 aufweist. Die Lasche 3 kann x vorzugsweise parallele Biegebereiche 34 aufweisen, wobei x der Menge der positiven natürlichen Zahlen entspricht. Die Anzahl an x Biegebereichen 34 trennt die Lasche 3 dann in (x + 1) zueinander abgewinkelte Schenkel 35, 36, wobei sowohl die gewindeartigen Außenkanten 30, 31 als auch wenigstens einer, mehrere oder alle Biegebereiche 34 eine Anlagefläche für die Gewindemutter M bilden, welche in Richtung der Achse A auf die Lasche 3 aufschraubbar ist.

Die Schenkel 35, 36 der Lasche 3 bzw. (bei vorliegen von mehr als zwei Schenkeln 35, 36) jeweils benachbarte Schenkel 35, 36 der Lasche 3 schließen vorzugsweise einen Winkel zwischen 30 und 150° ein, vorzugsweise von 60°. In einer Draufsicht auf die Lasche 3 (vgl. die Ansicht in Figur 1d), also senkrecht auf die Achse A gesehen, weist die Lasche 3 mit den abgewinkelten Schenkeln 35, 36 vorzugsweise eine V-Form (bei einem Biegebereich 34), eine N-Form oder U-Form (bei zwei Biegebereichen 34), eine W-Form (bei drei Biegebereichen) oder eine sonstige beliebige Form auf. Entscheidend ist lediglich, dass die beiden gewindeartigen Außenkanten 30, 31 der Lasche 3 sowie wenigstens einer der Biegebereiche 34 eine Anlagefläche für die Gewindemutter M beim Aufschrauben derselben auf die Lasche 3 bereitstellen. Hierzu liegen in Richtung der Achse A gesehen (also senkrecht auf die Achse A gesehen; vgl. Draufsicht der Figur 1d) die Außenkanten der Lasche 3 und des Biegebereichs 34 bzw. der Biegebereiche (= Anlagepunkte) vorzugsweise auf einer Kreislinie eines diese verbindenden gedachten Kreises, welcher gleich oder größer dem Innendurchmesser I der auf die Lasche 3 aufzuschraubenden Gewindemutter M ist. Die Anlagepunkte sind vorzugsweise über den Umfang des gedachten Kreises, also auch desjenigen der Mutter M, verteilt angeordnet, besonders vorzugsweise gleichmäßig verteilt angeordnet.

Wie insbesondere aus Figur 1b ersichtlich ist, erstreckt sich vorzugsweise nur einer der Schenkel 35 integral aus dem Befestigungsbereich 2. Der andere Schenkel 36 ist lediglich mit dem einen Schenkel 35 über den Biegebereich 34 mit diesem und somit auch nur über den einen Schenkel 35 mit dem Befestigungsbereich 2 verbunden. Somit kann der eine Schenkel 35 als fester Schenkel 35 und der andere Schenkel 36 als freier Schenkel 36 verstanden werden. Liegen mehr als zwei Schenkel 35, 36 vor, so sind neben dem festen Schenkel 35 vorzugsweise die übrigen Schenkel als freie Schenkel 36 ausgebildet und nur über die jeweiligen Biegebereiche 34 miteinander und über den einen Schenkel 35 mit dem Befestigungsbereich 2 verbunden. Somit kann auf einfache Weise die Lasche 3, wenn gewünscht, bezüglich des Befestigungsbereichs 2 umgebogen und die Schenkel 35, 36 zueinander abgewinkelt werden, während gleichzeitig eine stabile integrale Verbindung zwischen der Lasche 3 und dem Befestigungsbereich 2 aufrechterhalten bleibt.

Vorzugsweise ist einer der Schenkel 35 um eine erste orthogonal zur Achse A ausgerichtete Schwenkachse S1 zu dem Befestigungsbereich 2 abgewinkelt, und der oder die anderen Schenkel 36 sind um eine Achse S2 entlang dem zugehörigen Biegebereich 34 wenigstens zu dem einen Schenkel 35 abgewinkelt. Vorzugsweise kann die Lasche 3 somit in einfacher Weise um die Schwenkachse S1 in einen zum Befestigungselement 2 gewünschten Winkel umgebogen und ausgerichtet werden; beispielsweise einen 90° Winkel, wie in Figur 1 gezeigt. Zudem kann durch das wahlweise Umbiegen um eine weitere Schwenkachse S2 entlang des jeweiligen Biegebereichs 34 eines jeden Schenkels 36 zu einem anderen Schenkel 35 eine beliebige Ausrichtung der Schenkel 35, 36 zueinander erzielt werden. Bei einer beliebigen Anzahl und Anordnung der Biegebereiche 34 kann somit eine gewünschte Anlagefläche für eine auf die Lasche 3 aufzuschraubenden Mutter M wahlweise bestimmt und festgelegt werden.

Vorzugsweise weist das Montageelement 1 zusätzlich einen integral ausgebildeten Lockerungsschutz für die aufzuschraubende Mutter M auf. Hierzu kann bspw. einer der Schenkel 35, 36 über seine Länge eine variierende Breite aufweisen. So kann der entsprechende Schenkel 35, 36 der Lasche 3 beispielsweise in einem mittleren Bereich in Längsachse A gesehen breiter ausgebildet sein und in einem dem Befestigungsbereich 2 zugewandten bzw. in diesen übergehenden Ende schmaler ausgebildet sein. In dem breiteren Bereich kann die gedachte Kreislinie der Anlagepunkte der gewindeartigen Außenkanten 30, 31 sowie der Biegebereiche 34 einen Durchmesser aufweisen, welcher größer als der Innendurchmesser I der Mutter M ist. Somit spannt die Mutter M beim Aufschrauben den mittleren Bereich des entsprechenden Schenkels 35, 36 vor, welcher wiederum die Mutter M bei weiterem Aufschrauben in Richtung des schmaleren Bereichs drückt und somit in Anlage an den Befestigungsbereich 2 bringt und/oder hält.

Es ist auch denkbar, dass wenigstens einer, mehrere oder alle Schenkel 35, 36 sich mit zunehmendem Abstand von dem Befestigungsbereich 2 verjüngen bzw. zusammenlaufen. Diese Schenkel 35, 36 können vorzugsweise konisch oder kegelstumpfartig (in einer Seitenansicht) bzw. trapezförmig ausgebildet sein. Der Durchmesser der gedachten Kreislinie der Anlagepunkte ist dabei wenigstens in einem dem Befestigungsbereich 2 nahen Bereich der Lasche 3 größer als der Innendurchmesser I der aufzuschraubenden Mutter M. Beim Aufschrauben der Mutter M auf die Lasche 3 muss der oder müssen die entsprechend konisch bzw. trapezförmig ausgebildeten Schenkel 35, 36 (leicht) auswandern, um der konischen bzw. trapezförmigen Gestaltung Rechnung zu tragen. Die konischen bzw. trapezförmigen Schenkel 35, 36 werden folglich (leicht) verbogen und somit gegenüber der Mutter M wie eine Feder vorgespannt. Dies hat letztendlich zur Folge, dass nach dem Aufschrauben der Mutter M auf die gezahnte Lasche 3 ein Verkeilen zwischen beiden Elementen erzielt wird, was insbesondere ein selbstständiges Lösen der Mutter M aus der aufgeschraubten Stellung verhindert.

Das Montageelement 1 stellt somit ein besonders leichtes Element mit minimaler Teileanzahl und geringem Materialeinsatz dar, welches zudem eine sichere Führung einer darauf zu schraubenden Mutter M ermöglicht. Da das gesamte Montageelement 1 integral aus einem Blech hergestellt ist, kann dessen Kontur in einfacher Weise durch bekannte Stanz- oder Laserschneidverfahren erstellt und wahlweise umgebogen werden; also bspw. als Stanzbiegeteil gefertigt werden.

So wird beispielsweise in einem ersten Schritt aus einem Blech die Kontur des Montageelements 1 aufweisend den Befestigungsbereich 2, die Lasche 3 sowie die gewindeartigen Außenkanten gefertigt. In einem zweiten Schritt wird das ausgestanzte oder durch ein anderes Verfahren erstellte Blechteil entsprechend der gewünschten Form umgebogen, wobei auch die Lasche 3 bzgl. dem Befestigungsteil 2 um die Schwenkachse S1 gebogen werden kann und die freien Schenkel 36 um die weitere(n) Schwenkachse(n) S2 entsprechend umgebogen wird/werden.

Die Erfindung ist ebenso auf ein Leuchtengehäuse aufweisend einen Blechkörper gerichtet, wobei der Blechkörper integral mit dem Montageelement 1 gemäß der Erfindung ausgebildet ist, also bspw. ebenfalls in einem Stanz-Biege-Vorgang mit dem Montageelement 1 einstückig hergestellt sein kann. Der Befestigungsbereich 2 des Montageelements 1 kann dabei den Blechkörper des Leuchtengehäuses bilden.

Darüber hinaus wurde im bevorzugten Ausführungsbeispiel der Figur 1 beschrieben, dass die Lasche 3 zwei gewindeartige Außenkanten 30, 31 aufweist. Es ist jedoch auch denkbar, dass die Lasche 3 nur eine gewindeartige Außenkante aufweist und dann wie folgt ausgebildet sein kann, wobei gleiche Merkmale mit denselben Bezugszeichen versehen sind, bezüglich derer auch auf obige Ausführungen vollumfänglich verwiesen wird.

So weist das Montageelement 1 aus Blech dann ebenfalls einen Befestigungsbereich 2 sowie eine integral mit dem Befestigungsbereich 2 ausgebildete und sich vom Befestigungsbereich 2 in Richtung einer Achse A weg erstreckende Lasche 3 auf. Die Lasche 3 weist an wenigstens einer zur Achse A im Wesentlichen parallelen Außenkante 30, 31 eine gewindeartige Außenkontur 32, 33 auf. Die Lasche 3 weist ferner wenigstens einen sich in Richtung der Achse A erstreckenden Biegebereich 34 auf, welcher die Lasche 3 in zwei zueinander abgewinkelte Schenkel 35, 36 trennt, wobei wenigstens einer der Schenkel 35, 36 die gewindeartige Außenkante 30, 31 aufweist. Der Biegebereich 34 verläuft alternativ oder zusätzlich im Wesentlichen parallel zu der gewindeartigen Außenkante 30, 31 und zwischen der gewindeartigen Außenkante 30, 31 und einer dazu im Wesentlichen parallelen zweiten Außenkante 31, 30 der Lasche 3 in Richtung der Achse A und trennt die Lasche 3 in die zwei zueinander abgewinkelten Schenkel 35, 36. Sowohl die gewindeartige Außenkante 30, 31 als auch die dazu im Wesentlichen parallele zweite Außenkante 31, 30 des anderen Schenkels 36, 35 der Lasche 3 sowie der Biegebereich 34 bilden jeweils eine Anlagefläche für eine Gewindemutter M, welche in Richtung der Achse A auf die Lasche 3 aufschraubbar ist. Die zweite Außenkante 31, 30 kann entsprechend dem Ausführungsbeispiel der Figur 1 ebenfalls eine gewindeartige Außenkontur 33, 32 aufweisen. Es sei darüber hinaus darauf hingewiesen, dass alles zum Ausführungsbeispiel der Figur 1 mit zwei gewindeartigen Außenkanten Gesagte in gleicher Weise für das Ausführungsbeispiel mit nur einer oder auch mehr als einer gewindeartigen Außenkante gilt.

Die Erfindung ist überdies nicht auf die vorhergehenden Ausführungsbeispiele beschränkt, solange sie vom Gegenstand der folgenden Ansprüche gedeckt ist. So ist die Erfindung beispielsweise nicht auf die Größe und Anzahl der Schenkel 35, 36 der Lasche 3 beschränkt, solange diese eine Anlage der Mutter M an wenigstens drei möglichst voneinander beabstandeten Punkten ermöglicht. Auch ist das Material des Bleches nicht durch die Erfindung beschränkt. Dasselbe gilt für den Durchmesser des die Außenkanten verbindenden, gedachten Kreises. Auch sind der Ausgestaltung des Befestigungsbereichs 2 im Hinblick auf Struktur und Funktion keine Grenzen gesetzt, solange der Befestigungsbereich 2 einstückig mit der Lasche 3 ausgebildet ist.

## Patentansprüche

1. Montageelement (1) aus einem Blech, aufweisend einen Befestigungsbereich (2) sowie eine integral mit dem Befestigungsbereich (2) ausgebildete und sich vom Befestigungsbereich (2) in Richtung einer Achse (A) weg erstreckende Lasche (3), wobei die Lasche (3) an wenigstens einer zur Achse (A) im Wesentlichen parallelen Außenkante (30, 31) eine gewindeartige Außenkontur (32, 33) aufweist, und wobei die Lasche (3) wenigstens einen sich in Richtung der Achse (A) erstreckenden Biegebereich (34) aufweist, welcher die Lasche (3) in zwei zueinander abgewinkelte Schenkel (35, 36) trennt, wobei wenigstens einer der Schenkel (35, 36) die Außenkante (30, 31) mit gewindeartiger Außenkontur (32, 33) aufweist, wobei sowohl diese gewindeartige Außenkante (30, 31) als auch eine dazu im Wesentlichen parallele zweite Außenkante (31, 30) des anderen Schenkels (36, 35) der Lasche (3) sowie der Biegebereich (34) jeweils eine Anlagefläche für eine Gewindemutter (M) bilden, welche in Richtung der Achse (A) auf die Lasche (3) aufschraubbar ist,
**dadurch gekennzeichnet, dass**
einer der Schenkel (35) sich integral aus dem Befestigungsbereich (2) erstreckt und der oder die andere(n) Schenkel (36) nur über den oder die Biegebereich(e) (34) miteinander und über den einen Schenkel (35) mit dem Befestigungsbereich (2) verbunden ist/sind.

2. Montageelement (1) nach Anspruch 1, wobei der Biegebereich (34) im Wesentlichen parallel zu der gewindeartigen Außenkante (30, 31) und zwischen der gewindeartigen Außenkante (30, 31) und der dazu im Wesentlichen parallelen zweiten Außenkante (31, 30) der Lasche (3) in Richtung der Achse (A) verläuft.

3. Montageelement (1) nach einem der vorhergehenden Ansprüche, wobei die zweite Außenkante (31, 30) ebenfalls eine gewindeartige Außenkontur (33, 32) aufweist.

4. Montageelement (1) nach einem der vorhergehenden Ansprüche, wobei die Lasche (3) an zwei gegenüberliegenden freien Enden (30, 31) jeweils eine gewindeartige Außenkante (32, 33) aufweist, und wobei der Biegebereich (34) die Lasche (3) in die zwei zueinander abgewinkelten Schenkel (35, 36) mit jeweils einer gewindeartigen Außenkante (30, 31) trennt.

5. Montageelement (1) nach Anspruch 3 oder 4, wobei der Biegebereich (34) im Wesentlichen parallel zu und zwischen beiden gewindeartigen Außenkanten (30, 31) in Richtung der Achse (A) verläuft.

6. Montageelement (1) nach einem der vorhergehenden Ansprüche, wobei die Lasche (3) x parallele Biegebereiche (34) aufweist, welche die Lasche (3) in (x + 1) zueinander abgewinkelte Schenkel (35, 36) trennt, wobei sowohl die gewindeartigen Außenkanten (30, 31) als auch wenigstens einer der Biegebereiche (34) eine Anlagefläche für eine Gewindemutter (M) bilden, welche in Richtung der Achse (A) auf die Lasche (3) aufschraubbar ist.

7. Montageelement (1) nach einem der vorhergehenden Ansprüche, wobei wenigstens einer der Schenkel (35, 36) über seine Länge in Richtung der Achse (A) gesehen eine variierende Breite aufweist.

8. Montageelement (1) nach einem der vorhergehenden Ansprüche, wobei sich wenigstens einer der Schenkel (35, 36) mit zunehmendem Abstand von dem Befestigungsbereich (2) verjüngt bzw. zusammenläuft, vorzugsweise wenigstens einer der Schenkel (35, 36) konisch oder kegelstumpfartig in der Seitenansicht oder trapezförmig ausgebildet ist.

9. Montageelement (1) nach einem der vorhergehenden Ansprüche, wobei einer der Schenkel (35) um eine erste orthogonal zur Achse (A) ausgerichtete Schwenkachse (S1) zu dem Befestigungsbereich (2) abgewinkelt ist, und der oder die andere(n) Schenkel (36) um eine weitere Schwenkachse (S2) entlang dem zugehörigen Biegebereich (34) wenigstens zu dem einen Schenkel (35) abgewinkelt ist/sind.

10. Montageelement (1) nach einem der vorhergehenden Ansprüche, wobei die Schenkel (35, 36) der Lasche (3) bzw. benachbarte Schenkel (35, 36) der Lasche (3) einen Winkel zwischen 30 und 150° einschließen, vorzugsweise von 60°.

11. Montageelement (1) nach einem der vorhergehenden Ansprüche, wobei auch der Biegebereich (34) entlang seiner Außenkante eine gewindeartige Außenkontur aufweist.

12. Montageelement (1) nach einem der vorhergehenden Ansprüche, wobei in Richtung der Achse (A) gesehen die Außenkanten (30, 31) der Lasche (3) und des Biegebereichs (34) bzw. der Biegebereiche (34) auf einer Kreislinie eines diese verbindenden gedachten Kreises liegen, welcher gleich oder größer dem Innendurchmesser (I) einer auf die Lasche (3) aufzuschraubenden Gewindemutter (M) ist.

13. Montageelement (1) nach einem der vorhergehenden Ansprüche, wobei die Lasche (3) sich bezüglich des Befestigungsbereichs (2) in einem vorbestimmten Winkel, vorzugsweise 90°, von dem Befestigungsbereich (2) weg erstreckt.

14. Montageelement (1) nach einem der vorhergehenden Ansprüche, wobei die Kontur des Befestigungsbereichs (2), der Lasche (3) und/oder der gewindeartigen Außenkanten (30, 31) durch einen Stanzvorgang oder einen Laserschneidvorgang gebildet sind.

15. Montageelement (1) nach einem der vorhergehenden Ansprüche, wobei der Befestigungsbereich (2) einstückiger Bestandteil eines Blechkörpers, wie z.B. eines Leuchtengehäuses, ist.

16. Leuchtengehäuse aufweisend einen Blechkörper, wobei der Blechkörper integral mit einem Montageelement (1) gemäß einem der vorhergehenden Ansprüche ausgebildet ist.

17. Leuchtengehäuse nach Anspruch 16, wobei der Befestigungsbereich (2) des Montageelements (1) den Blechkörper des Leuchtengehäuses bildet.

## Claims

1. Mounting element (1) made of sheet metal, having a fastening area (2) as well as a tab (3) integrally configured with the fastening area (2) and extending away from the fastening area (2) towards an axis (A), wherein the tab (3) on at least one outer edge (30, 31) essentially parallel to the axis (A) has a thread-like outer outline (32, 33), and wherein the tab (3) has at least one bending area (34), extending towards the axis (A), that separates the tab (3) into two shanks (35, 36) angled to one another, wherein at least one of the shanks (35, 36) has the outer edge (30, 31) with thread-like outer outline (32, 33), wherein this thread-like outer edge (30, 31) as well as a second outer edge (31, 30) essentially parallel thereto of the other shank (36, 35) of the tab (3) as well as the bending area (34) each form a bearing surface for a threaded nut (M), which can be screwed onto the tab (3) in the direction of the axis (A), **characterized in that** one of the shanks (35) extends integrally from the fastening area (2) and **in that** the other shank or shanks (36) are only connected with each other via the bending area or bending areas (34) and via the one shank (35) with the fastening area (2).

2. Mounting element (1) according to claim 1, wherein the bending area (34) runs, in the direction of the axis (A), essentially parallel to the thread-like outer edge (30, 31) and between the thread-like outer edge (30, 31) and the second outer edge (31, 30), essentially parallel thereto, of the tab (3).

3. Mounting element (1) according to one of the preceding claims, wherein the second outer edge (31, 30) also has a thread-like outer outline (33, 32).

4. Mounting element (1) according to one of the preceding claims, wherein the tab (3) has a thread-like outer edge (32, 33) on two opposite free ends (30, 31), respectively, and wherein the bending area (34) separates the tab (3) into two shanks (35, 36), angled to one another, with a thread-like outer edge (30, 31), respectively.

5. Mounting element (1) according to claim 3 or 4, wherein the bending area (34) runs essentially parallel to the and between both thread-like outer edges (30, 31) in the direction of the axis (A).

6. Mounting element (1) according to one of the preceding claims, wherein the tab (3) has x parallel bending areas (34), which separate the tab (3) into (x + 1) shanks (35, 36) angled to one another, wherein the thread-like outer edges (30, 31) as well as at least one of the bending areas (34) form a bearing surface for a threaded nut (M), which can be screwed onto the tab (3) in the direction of the axis (A).

7. Mounting element (1) according to one of the preceding claims, wherein at least one of the shanks (35, 36) has over its length, viewed in the direction of the axis (A), a varying width.

8. Mounting element (1) according to one of the preceding claims, wherein at least one of the shanks (35, 36) tapers/runs together with increasing distance from the fastening area (2), preferably at least one of the shanks (35, 36) is configured conical or truncated in the lateral view or trapezoid.

9. Mounting element (1) according to one of the preceding claims, wherein one of the shanks (35) is angled to the fastening area (2) around a first swivel axis (S1) orthogonally aligned to the axis (A), and the other shank or shanks (36) are aligned at least to the one shank (35) around another swivel axis (S2) along the corresponding bending area (34).

10. Mounting element (1) according to one of the preceding claims, wherein the shanks (35, 36) of the tab (3) or adjacent shanks (35, 36) of the tab (3) enclose an angle between 30 and 150°, preferably of 60°.

11. Mounting element (1) according to one of the preceding claims, wherein also the bending area (34) has a thread-like outer outline along its outer edge.

12. Mounting element (1) according to one of the preceding claims, wherein, viewed in direction of the axis (A), the outer edges (30, 31) of the tab (3) and of the bending area (34) or bending areas (34) are located on a circular line of an imaginary circle connecting them, which is equal or greater than the inner diameter (I) of a threaded nut (M) to be screwed onto the tab (3).

13. Mounting element (1) according to one of the preceding claims, wherein the tab (3) extends, with regard to the fastening area (2), in a predetermined angle, preferably 90°, away from the fastening area (2) .

14. Mounting element (1) according to one of the preceding claims, wherein the outline of the fastening area (2), the tab (3) and/or the thread-like outer edges (30, 31) are formed by a die cutting process or a laser cutting process.

15. Mounting element (1) according to one of the preceding claims, wherein the fastening area (2) is a one-piece part of a sheet metal body, such as a lighting housing.

16. Lighting housing having a sheet metal body, wherein the sheet metal body is integrally configured with a mounting element (1) according to one of the preceding claims.

17. Lighting housing according to claim 16, wherein the fastening area (2) of the mounting element (1) forms the sheet metal body of the lighting housing.

## Revendications

1. Élément de montage (1) fabriqué en tôle, présentant une zone de fixation (2) et une languette (3) configurée intégralement avec la zone de fixation (2) et s'éloignant de la zone de fixation (2) en direction d'un axe (A), dans lequel la languette (3), sur au moins un bord externe (30, 31) essentiellement parallèle à l'axe (A), présente un profil externe type filet (32, 33), et dans lequel la languette (3) présente au moins une zone de flexion (34) se développant vers l'axe (A), qui sépare la languette (3) en deux ailes (35, 36) placées angulairement l'une par rapport à l'autre, dans lequel au moins l'une des ailes (35, 36) a le bord externe (30, 31) avec un profil externe type filet (32, 33), dans lequel ce bord externe type filet (30, 31) et un second bord externe (31, 30), essentiellement parallèle à celui-ci, de l'autre aile (36, 35) de la languette (3) et la zone de flexion (34) forment chacun une surface d'appui pour un écrou fileté (M), qui peut être vissé sur la languette (3) dans la direction de l'axe (A), **caractérisé en ce que** l'une des ailes (35) se développe totalement depuis la zone de fixation (2) et **en ce que** l'autre aile ou les autres ailes (36) ne sont raccordées l'une à l'autre que par la zone de flexion ou par les zone de flexion (34) et à la zone de fixation (2) par l'aile (35) .

2. Élément de montage (1) selon la revendication 1, dans lequel la zone de flexion (34) se développe, dans la direction de l'axe (A), essentiellement parallèle au bord externe type filet (30, 31) et entre le bord externe type filet (30, 31) et le second bord externe (31, 30), essentiellement parallèle à celui-ci, de la languette (3).

3. Élément de montage (1) selon l'une quelconque des revendications précédentes, dans lequel le second bord externe (31, 30) présente également un profil externe type filet (33, 32).

4. Élément de montage (1) selon l'une quelconque des revendications précédentes, dans lequel la languette (3) présente un bord externe type filet (32, 33) sur deux extrémités libres opposées (30, 31) respectivement, et dans lequel la zone de flexion (34) sépare la languette (3) en deux ailes (35, 36), placées angulairement l'une par rapport à l'autre, avec un bord externe type filet (30, 31), respectivement.

5. Élément de montage (1) selon les revendications 3 ou 4, dans lequel la zone de flexion (34) se développe essentiellement parallèle aux et entre les deux bords externes type filet (30, 31) dans la direction de l'axe (A) .

6. Élément de montage (1) selon l'une quelconque des revendications précédentes, dans lequel la languette (3) présente x zones de flexion parallèles (34), qui séparent la languette (3) en (x + 1) ailes (35, 36) placées angulairement l'une par rapport à l'autre, dans lequel les bords externes type filet (30, 31) et au moins l'une des zones de flexion (34) forment une surface d'appui pour un écrou fileté (M), qui peut être vissé sur la languette (3) dans la direction de l'axe (A) .

7. Élément de montage (1) selon l'une quelconque des revendications précédentes, dans lequel au moins l'une des ailes (35, 36) présente sur sa longueur, vue dans la direction de l'axe (A), une largeur variable.

8. Élément de montage (1) selon l'une quelconque des revendications précédentes, dans lequel au moins l'une des ailes (35, 36) se rétrécit/se développe avec une distance croissante depuis la zone de fixation (2), de préférence au moins l'une des ailes (35, 36) présente une configuration conique ou tronquée dans la vue latérale ou trapézoïdale.

9. Élément de montage (1) selon l'une quelconque des revendications précédentes, dans lequel l'une des ailes (35) est placée angulairement par rapport à la zone de fixation (2) autour d'un premier axe de pivotement (S1), alignée orthogonalement sur l'axe (A), et l'autre aile ou les autres ailes (36) sont alignées au moins sur l'aile (35) autour d'un autre axe de pivotement (S2) le long de la zone de flexion correspondante (34).

10. Élément de montage (1) selon l'une quelconque des revendications précédentes, dans lequel les ailes (35, 36) de la languette (3) ou les ailes adjacentes (35, 36) de la languette (3) forment un angle compris entre 30 et 150°, de préférence 60°.

11. Élément de montage (1) selon l'une quelconque des revendications précédentes, dans lequel la zone de flexion (34) présente également un profil externe type filet le long de son bord externe.

12. Élément de montage (1) selon l'une quelconque des revendications précédentes, dans lequel, vus dans la direction de l'axe (A), les bords externes (30, 31) de la languette (3) et de la zone de flexion (34) ou des zones de flexion (34) sont situés sur une ligne circulaire d'un cercle imaginaire les raccordant, qui est égal ou supérieur au diamètre intérieur (I) d'un écrou fileté (M) à visser sur la languette (3).

13. Élément de montage (1) selon l'une quelconque des revendications précédentes, dans lequel la languette (3), en ce qui concerne la zone de fixation (2), selon un angle prédéterminé, de préférence 90°, s'éloigne de la zone de fixation (2).

14. Élément de montage (1) selon l'une quelconque des revendications précédentes, dans lequel le profil de la zone de fixation (2), la languette (3) et/ou les bords externes type filet (30, 31) sont découpés à l'emporte-pièce ou par un laser.

15. Élément de montage (1) selon l'une quelconque des revendications précédentes, dans lequel la zone de fixation (2) est une pièce monobloc d'un corps de tôle, comme un boîtier de luminaire.

16. Boîtier de luminaire ayant un corps de tôle, dans lequel le corps de tôle est configuré intégralement avec un élément de montage (1) selon l'une quelconque des revendications précédentes.

17. Boîtier de luminaire selon la revendication 16, dans lequel la zone de fixation (2) de l'élément de montage (1) forme le corps de tôle du boîtier de luminaire.
